# EUROPÄISCHE PATENTSCHRIFT

(11) **EP 0 667 663 B1**
(45) Veröffentlichungstag und Bekanntmachung des Hinweises auf die Patenterteilung: **28.05.1997**
(21) Anmeldenummer: 94120659.1
(22) Anmeldetag: 24.12.1994
(51) Int. Cl.: H02B 13/035

(54) **Schaltanlage mit Verbindungskanal**
Switchgear with connection channel
Installation de commutation avec canal de connexion

(30) Priorität: 11.02.1994 DE 4404339
(43) Veröffentlichungstag der Anmeldung: 16.08.1995
(73) Patentinhaber: AEG Sachsenwerk GmbH, D-93055 Regensburg (DE)
(72) Erfinder: Reichl, Erwin, Dipl.-Ing., D-93105 Tegernheim (DE); Stegmüller, Karl, Dipl.-Ing., D-93109 Wiesent (DE)
(74) Vertreter: Dreiss, Fuhlendorf, Steimle & Becker

(56) Entgegenhaltungen:
- EP-A- 0 438 769
- PATENT ABSTRACTS OF JAPAN vol. 16, no. 530 (E-1287) 30. Oktober 1992 & JP-A-04 197 007 (HITACHI) 16. Juli 1992
- PATENT ABSTRACTS OF JAPAN vol. 13, no. 298 (E-784) 10. Juli 1989 & JP-A-01 077 406 (TOSHIBA) 23. März 1989

## Beschreibung

Die Erfindung betrifft eine Schaltanlage gemäß dem Oberbegriff des ersten Anspruchs (siehe JP-A-4 197 007).

Bei einer bekannten Schaltanlage dieser Art (DE 40 01 909 A1) ist zwischen zwei druckdichten, mit einem Isoliergas gefüllten Gehäusen mit darin untergebrachten Schalteinrichtungen für Mittelspannung ein Verbindungskanal vorgesehen, der druckdicht an angepaßte Flansche mit Verbindungsöffnungen im jeweiligen Gehäuse angesetzt ist und einen freien Druckausgleich zwischen den Gehäusen ermöglicht. Durch diesen Verbindungskanal ist ein elektrischer Verbindungleiter geführt, der Sammelschienen in den beiden Gehäusen elektrisch kuppelt. Die Verbindungsöffnungen befinden sich dabei entweder in parallel zueinander deckungsgleich voreinander stehenden Stirnwänden der beiden betroffenen Gehäuse, so daß der Verbindungskanal als gerades Rohrstück ausgebildet werden kann. Werden die Gehäuse mit benachbarten Stirnwänden eng aneinander gestellt, dann sind die Verbindungsöffnungen in Deck- oder Seitenwänden vorgesehen, die in einer Ebene flächig nebeneinanderliegen. Der Verbindungskanal ist dann bogenförmig ausgebildet und außen auf die entsprechende Wand druckdicht aufgesetzt. Während des Transports der einzelnen Gehäuse sind im übrigen die Verbindungsöffnungen mittels einer Abdeckplatte dicht abgeschlossen. Nach dem Aneinanderreihen der einzelnen Gehäuse von Schaltfeldern oder Schaltfeldgruppen werden dann die jeweils benötigten Verbindungsöffnungen freigelegt. Das hat jedoch zur Folge, daß Isoliergas aus dem jeweiligen Gehäuse ausströmen bzw. Luft in das Gehäuse einströmen kann. Eine werksseitige Befüllung der Gehäuse mit Überdruck ist in diesem Falle unwirtschaftlich, obwohl eine Überdruckbefüllung während des Betriebs der Schaltanlage von Vorteil ist.

Der Erfindung liegt die Aufgabe zugrunde, bei einer Schaltanlage gemäß dem Oberbegriff des ersten Anspruchs Maßnahmen zu treffen, durch welche eine betriebsgerechte Gasfüllung in den einzelnen Gehäusen aufrechterhalten bleibt, wenn nachträglich der Verbindungskanal an diese Gehäuse angesetzt wird.

Die Lösung dieser Aufgabe erfolgt gemäß der Erfindung durch die kennzeichnenden Merkmale des ersten Anspruchs.

Bei einem Aufbau einer Schaltanlage gemäß der Erfindung werden die Verbindungsöffnungen in den elektrisch wie gasmäßig zu kuppelnden Gehäusen mit steuerbaren Ventilanordnungen verschlossen, so daß die Gehäuse mit einem gewissen Überdruck mit Isoliergas werksseitig gefüllt werden können. Nach dem Aneinanderreihen dieser Schaltfelder oder Schaltfeldgruppen umschließenden Gehäuse kann dann, ohne ein Ventil zu öffnen, der Verbindungskanal gasdicht angesetzt werden. Danach ist es möglich, den Verbindungskanal weitgehend zu evakuieren und anschließend mit einer Druckgasfüllung von außen zu versehen und/oder danach wenigstens ein Ventil zu öffnen. Es ist jedoch auch zweckmäßig, beim höchsten Punkt des Verbindungskanals eine Entlüftungsöffnung vorzusehen, die zunächst geöffnet und dann eines der Ventile geringfügig geöffnet wird, so daß sich der Verbindungskanal mit dem Isoliergas, das schwerer als Luft ist, langsam füllt und die Luft nach außen drückt. Danach kann die Entlüftungsöffnung geschlossen und durch öffnen eines Ventils der Verbindungskanal aus dem betreffendem Gehäuse gefüllt werden und, falls gewünscht, durch Öffnen beider Ventile an den Enden des Verbindungskanals ein freier Gasaustausch zwischen den jeweils verbundenen Gehäusen stattfinden. Dieser freie Gasaustausch ist von Vorteil, wenn beispielsweise durch Auftreten eines Lichtbogen in einem Gehäuse ein vorübergehender Überdruck entsteht, der im Volumen des anderen Gehäuses oder der weiteren daran angeschlossenen Gehäuse ausgeglichen werden soll.

Insbesondere wird jedoch jeweils nur eines der Ventile geöffnet und offengelassen, so daß ein Gasaustausch zwischen Gehäusen unterbunden ist und im Falle eines Störlichtbogens im Verbindungskanal nur der Gehäuse-Gasraum mit der Druckwelle beaufschlagt wird, zu dem der Strömungsweg über die zugeordnete Ventilanordnung freigegeben ist. Der Verbindungskanal braucht bei diesem Aufbau und dieser Betriebsweise kein eigenes Druckentlastungselement aufzuweisen, das nötig ist, wenn der Verbindungskanal zwar aus einem der Gehäuse mit hochisolierendem Isoliergas gefüllt und anschließend die Ventilanordnung wieder geschlossen wird, um im Störfall nicht lichtbogengeschädigte Gasanteile in eines der Gehäuse gelangen zu lassen. Die Anordnung des oder der Ventile erspart es am Montageort der Schaltanlage, daß mit SF6-Isoliergas aus einem Behälter frei hantiert werden muß. Zudem bleibt im Bedarfsfall die gasmäßige Schottung der Anlagenteile gegeneinander möglich, wenn nämlich das oder die einem Verbindungskanal zugeordnete/n Ventil/e geschlossen wird/werden.

Der Verbindungskanal ist dabei zweckmäßig zugleich für die Führung eines elektrischen Kuppelleiters ausgebildet, der beispielsweise Sammelschienen in den beiden Gehäusen miteinander verbindet. Für den Kuppelleiter sind vorzugsweise elektrisch isolierte Durchführungen gasdicht in die Verbindungsöffnungen eingesetzt, neben welchen als einziger Gasweg die Ventile angeordnet sind. Die Durchführungen werden beim Anbau des Verbindungskanals über den Koppelleiter elektrisch miteinander verbunden. Innerhalb der Gehäuse sind an die Durchführungen vorzugsweise Sammelschienen angeschlossen. Um die Gehäuse mit ihren einander zugewandten Stirnseiten mit engem Trennspalt aneinanderstellen zu können, ist der Verbindungskanal an Deck- oder Seitenwände der Gehäuse angeflanscht, die in einer Ebene flächig nebeneinander liegen. Am jeweiligen Ventil ist dabei eine Betätigungsvorrichtung vorgesehen, die durch den Verbindungskanal geführt und druckdicht durch eine seiner Begrenzungswände hindurch nach außen zur manuellen Betätigung ragen kann. Je Verbindungskanal kann es genügen, nur die Betätigungsvorrichtung für die zu einem der Gehäuse führende Ventilanordnung nach außen auszuleiten. Dabei ist es auch möglich, eine elektrische Verstelleinrichtung für die Ventile vorzusehen, so daß lediglich elektrische Durchführungen für Steuerleitungen am Verbindungskanal oder am jeweiligen Gehäuse erforderlich sind.

Die Ventilanordnung weist vorzugsweise eine an einer zentral angeordneten Gewindestange sitzende Ventilscheibe auf, die in eine am Gerätegehäuse festgesetzte Schraubmutter eingedreht ist und mit ihrem freien Ende in den Verbindungskanal ragt. Im Verbindungskanal ist eine nach außen ragende Betätigungswelle zweckmäßig, die mittels einer Steckkupplung in drehgesicherten Eingriff mit der Gewindestange tritt, so daß am außerhalb des Verbindungskanals liegenden Ende durch Betätigen der Betätigungswelle das jeweilige Ventil zu öffnen oder zu schließen ist. Um dabei sicherzustellen, daß die Ventile nach der Montage des Verbindungskanals sich in geöffneter Stellung befinden, ist in der Begrenzungswand des Verbindungskanals, durch den die Betätigungswelle nach außen geführt ist, eine Buchse dicht eingesetzt, die mit einem Gewinde versehen ist. Durch diese Buchse ragt die Betätigungswelle so weit hindurch, daß bei geschlossenem Ventil, also bei nach außen gestellter Betätigungswelle eine stirnseitig geschlossene Schraubkappe nicht auf die Buchse aufdrehbar ist. Befindet sich dagegen das Ventil in seiner geöffneten Stellung, dann ist auch die Betätigungswelle so weit in den Verbindungskanal hineingestellt, das ihr nach außen ragendes Ende das Aufschrauben der Schraubkappe auf die Buchse zuläßt. Hierdurch wird eine zusätzliche Kontrolle der Ventilstellung ermöglicht. Die Ventile sind vorzugsweise stufig zu öffnen, so daß in einer ersten Stufe lediglich ein geringer Strömungsquerschnitt freigegeben wird. Dadurch kann der Verbindungskanal langsam aus dem betreffenden Gehäuse mit Isoliergas gefüllt werden. Durch weiteres öffnen des Ventils ist dann der für einen im Störfall schnellen Druckausgleich erforderliche Querschnitt freigegeben. In einem Verbindungskanal können im übrigen mehrere Koppelleiter nebeneinander geführt werden, bei dreiphasiger Ausführung der Schalteinrichtungen vorzugsweise drei Koppelleiter. Den zusammengehörigen Durchführungen an einem Gehäuse braucht dabei nur ein Ventil zugeordnet zu sein.

Der Verbindungskanal ist insbesondere quaderförmig ausgebildet und greift vorzugsweise von der waagerechten Deckwand eines Gehäuses zur seitlich daneben in der gleichen Ebene weiterlaufenden Deckwand des anderen Gehäuses über. Dabei ist die den Deckwänden zugewandte Auflagewand des Verbindungskanals an ihrer Unterseite mit Flanschen und Ringdichtungen ausgestattet, welche zusammengehörende Durchführungen und das zugehörige Ventil umschließen und einen dichten Abschluß zwischen Gehäuse und Verbindungskanal schaffen. Dabei ist der mittlere Teil der planen, im Bereich der Durchführungen und des Ventils jeweils ausgesparten Auflagewand als Verbindungssteg ausgebildet, der vorzugsweise mittels Schrauben jeweils an den benachbarten Gehäusen festgesetzt ist und gleichzeitig den erforderlichen Preßdruck für die benachbarten Abschnitte der Dichtungsringe überträgt. Die vorzugsweise als Schraubverbindungen ausgebildeten Befestigungsmittel liegen innerhalb der Kontur des Verbindungskanals. Um an diese Schraubverbindungen heranzukommen, weist der Verbindungskanal im Bereich der Trennfuge zwischen benachbarten Gehäusen wenigstens einen Rohreinsatz auf, der gasdicht von dem Verbindungssteg durch eine gegenüberliegende Abdeckwand nach außen geführt und außen offen ist. Dieser Rohreinsatz umschließt die Befestigungsmittel, die dadurch innerhalb des Rohreinsatzes von außen frei zugänglich sind. Der Verbindungskanal kann jedoch auch einen abnehmbaren Gehäuseteil, vorzugsweise den der Auflagewand parallel gegenüberliegende Kanaldeckel aufweisen, so daß die für den dichten Anschluß des Verbindungskanals an die Gehäuse erforderlichen Befestigungsmittel und die Koppelleiter innerhalb des Verbindungskanals angeordnet werden können und bei abgenommenen Kanaldeckel frei zugänglich sind. Durch gasdichtes Verschließen des Deckels ist dann der Verbindungskanal insgesamt gegen den Austritt von Gas oder den Eintritt von Luft abgeschlossen.

Wenn der Verbindungskanal vollkommen vorgefertigt und ohne abnehmbaren Deckel ausgebildet ist, dann können die Koppelleiter unter Schrägstellung des aufgesetzten Verbindungskanals durch die Aussparungen des Verbindungskanals hindurch montiert werden, die mit den zugehörigen Verbindungsöffnungen der Gehäuse korrespondieren.

Die Erfindung ist nachfolgend anhand der Zeichnungen von Ausführungsbeispielen näher erläutert.

Es zeigen:
Fig. 1 eine schematische, frontseitig aufgeschnittene Schaltanlage aus mehreren miteinander durch Verbindungskanäle verbundenen Gehäusen von Mittelspannungs-Schaltfeldern oder Schaltfeldgruppen,

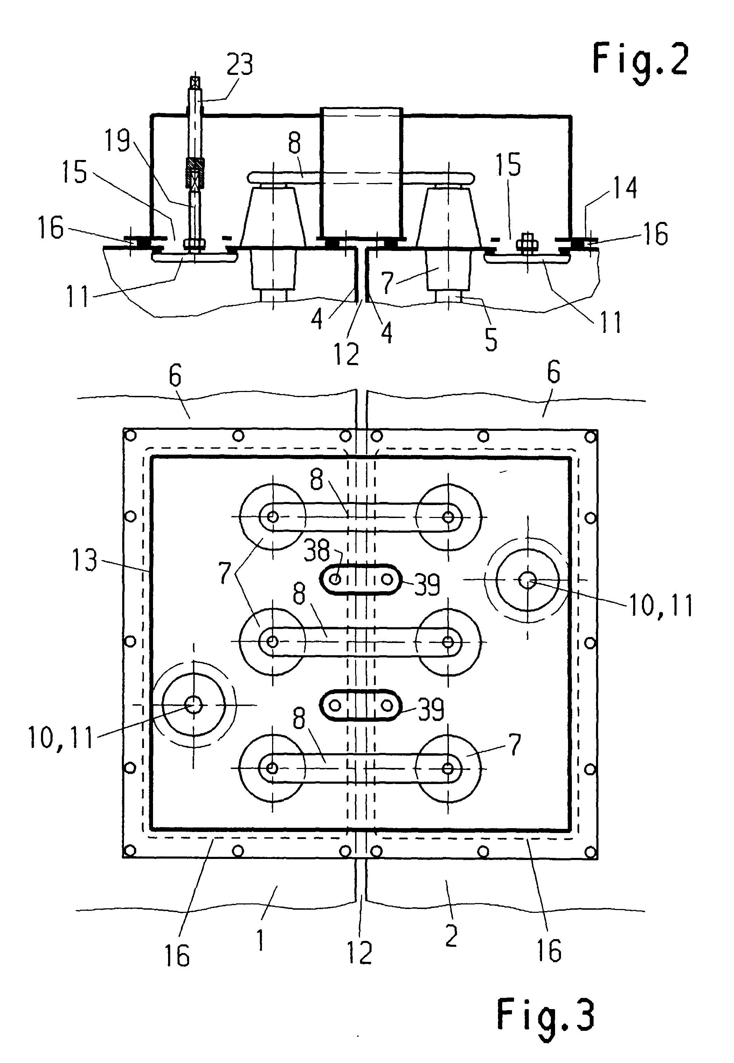

Fig. 2 eine schematische Teilansicht im Seitenschnitt im Bereich eines Verbindungskanals,
Fig. 3 eine Draufsicht auf die Anordnung nach Fig. 2,

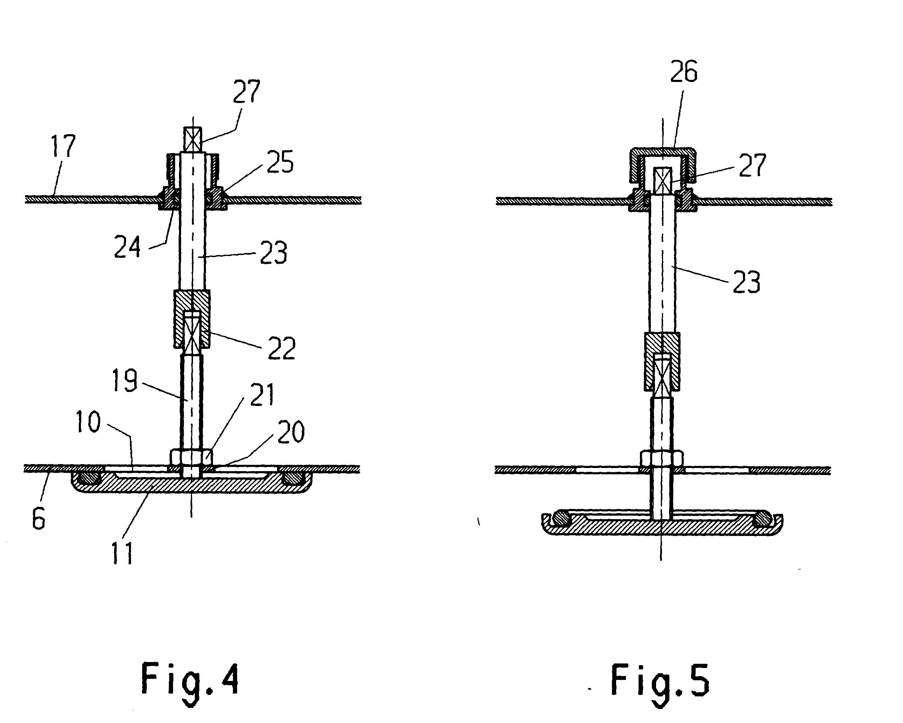

Fig. 4 eine Prinzipskizze über die Anordnung eines Ventils im geschlossenen Zustand,
Fig. 5 die Anordnung nach Fig. 4 bei geöffnetem Ventil und gesicherter Betätigungseinrichtung des Ventils,

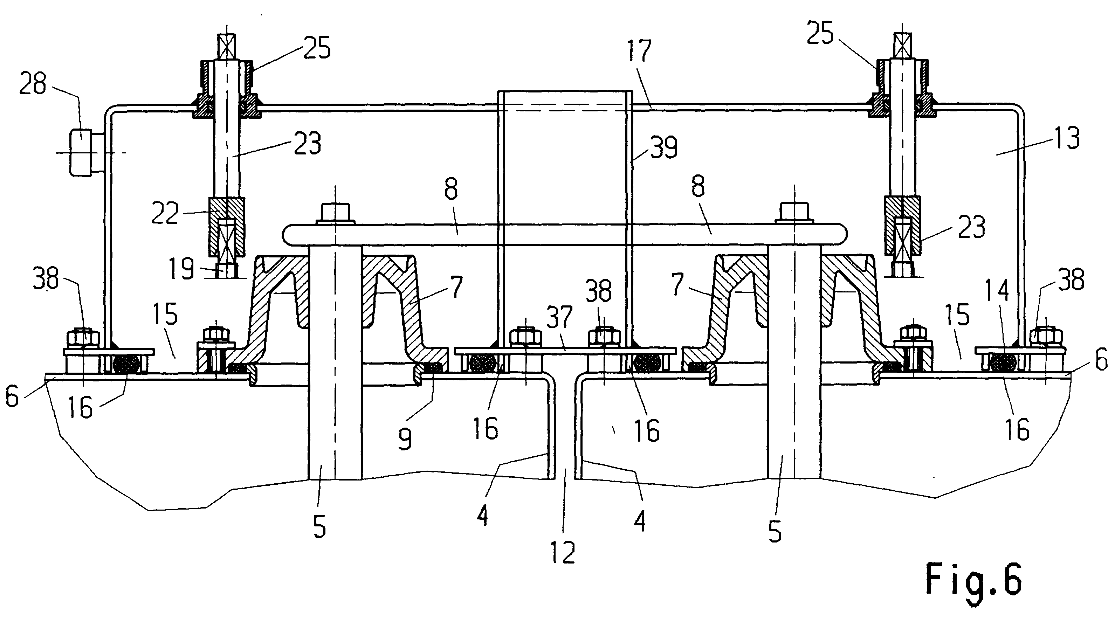

Fig. 6 eine Abwandlung der Anordnung nach Fig. 2,
Fig. 7 eine zweistufig öffnende Ventilanordnung, bei welcher ein kleiner Öffnungsquerschnitt freigegeben ist und
Fig. 8 die Anordnung nach Fig. 7 bei vollständig geöffnetem und lagegesichertem Ventil.

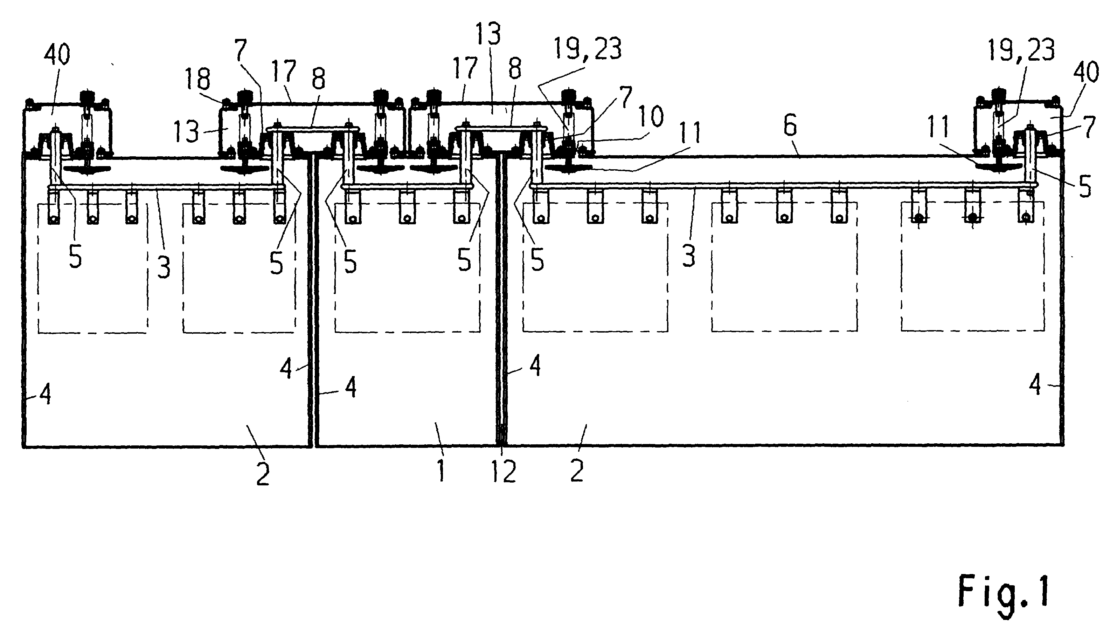

In einzelnen, im wesentlichen quaderförmigen, druckdichten und mit einem Isoliergas gefüllten Gehäusen 1,2 von ein- oder mehrfeldigen Schaltfeldern bzw. Schaltfeldgruppen einer gemäß Fig. 1 zusammengeschalteten Schaltanlage befinden sich außer waagerecht verlaufenden, insbesondere dreipolig ausgebildeten Sammelschienenanordnungen 3 weitere, nicht näher dargestellte Mittelspannungseinrichtungen. Benachbart zu eng aneinander anstellbaren Stirnwände 4 der Gehäuse 1,2 verlaufen von den Sammelschienen 3 nach oben gerichtete stromleitende Durchführungsbolzen 5, die jeweils in den Deckwänden 6 der Gehäuse 1,2 mittels Durchführungsisolatoren 7 gasdicht nach außen geführt sind. Um die in den Gehäusen 1,2 vorgesehenen Sammelschienen 3 miteinander zu verbinden, sind die äußeren Enden von Durchführungsbolzen 5 von einem Gehäuse 1 zum Durchführungsisolator 7 des benachbarten Gehäuses mittels eines Kuppelleiters 8 verbunden. Bei mehrphasigen Sammelschienensystemen sind je Phase eigene Durchführungen 5,7 vorgesehen, so daß die jeweils für die Verbindung vorgesehenen Kuppelleiter 8 parallel zueinander verlaufen und über die Trennfuge zwischen eng benachbarten Stirnwänden 4 reichen. Die Durchführungsisolatoren 7 sitzen jeweils unter Anwendung einer Ringdichtung 9 gasdicht in einem angepaßten Durchbruch der Deckwand 6. Durchführungen 5,7 sitzen jeweils im Bereich der Enden von zugehörigen Sammelschienen benachbart zu den jeweiligen Stirnwänden 4 des betreffenden Gehäuses, so daß die Sammelschienen in einem Gehäuse 1 über die Durchführungen 5,7 und Kuppelleiter 8 jeweils mit Durchführungen 5,7 der ggf, beidseitig angestellten Gehäuse 2 verbunden werden können. Außer den einer Stirnwand 4 zugeordneten Durchbrüchen für die Durchführungen 5,7 ist jeweils eine Verbindungsöffnung 10 in der jeweiligen Deckwand 6 vorgesehen, wobei dieser Verbindungsöffnung 10 eine steuerbare Ventilanordnung 11 zugeordnet ist. Zu jeder Durchführung 5,7 bzw. Gruppe von Durchführungen 5,7, die benachbart zur jeweiligen Stirnwand 4 eines Gehäuses vorgesehen ist, gehört somit eine Ventilanordnung 10,11.

Um den bzw. die die Trennfuge 12 zwischen aneinander anstehenden Stirnwänden der Gehäuse 1,2 überbrückenden Kuppelleiter 8 wie die Sammelschienen 3 in einer Isoliergas-Atmosphäre führen zu können, ist derselbe bzw. die zusammengehörige Gruppe von Kuppelleitern 8 jeweils in einen Verbindungskanal 13 gelegt. Dieser im wesentlichen quaderförmige Verbindungskanal 13 greift über die Trennfuge 12 hinweg und überdeckt die zusammengehörigen Durchführungen 5,7 einschließlich der jeweils zugehörigen Verbindungsöffnung 10 mit der Ventilanordnung 11. Bei geöffneter Ventilanordnung 11 steht dann der Innenraum des jeweiligen Verbindungskanals 13 mit der Isoliergasfüllung der beiden aneinander angrenzenden Gehäuse 1,2 in Verbindung. Über die geöffneten Ventilanordnungen 10,11 und den zugeordneten Verbindungskanal 13 hinweg kommunizieren so die Gasräume der auch elektrisch gekuppelten Gehäuse 1,2. Im Betrieb ist es jedoch zweckmäßig, den Verbindungskanal 13 nur über eine der Ventilanordnungen 10,11 mit einem der Gehäuse 1,2 kommunizieren zu lassen. Bei Druckabfall in einem Gehäuse wird dann die Betriebsfähigkeit der Anlagenteile in den übrigen Gehäusen nicht beeinträchtigt. Tritt ein Lichtbogen im Verbindungskanal auf, wird auch nur ein Gasraum und mit entstehenden Heißgas beaufschlagt.

Bei der Herstellung der mit Schalteinrichtungen und den Sammelschienen ausgestatteten Gehäuse 1,2 können dieselben einzeln bei geschlossenen Ventilanordnungen 10,11 ohne Verbindungskanal 13 einschließlich der erforderlichen Isoliergasfüllung werksseitig fertiggestellt und an einen entfernten Montageort transportiert werden. Dort wird der Verbindungskanal auf zusammengehörige Durchführungen 5,7 gestülpt, wobei in einer den Deckwänden 6 zugewandten Auflagewand 14 des Verbindungskanals 13 Aussparungen 15 vorgesehen sind, die jeweils einem Gehäuseende benachbarte Durchführung/en und die zugehörige Ventilanordnung mit der Verbindungsöffnung 10 umgreift. Der jeweiligen Aussparung 15 ist eine umlaufende Ringdichtung 16 zugeordnet, so daß mittels Schrauben oder sonstiger Befestigungsmittel 38 der Verbindungskanal 13 gasdicht an die jeweilige Deckwand 6 benachbarter Gehäuse 1,2 angeflanscht werden kann. Die Montage des mit einem Deckel versehenen Verbindungskanals 13 erfolgt dabei vor der Anbringung der Kuppelleiter 8. Für die Montage der Kuppelleiter 8 ist dabei zweckmäßig die der Auflagewand 14 gegenüberliegende Abdeckwand 17 des Verbindungskanals abnehmbar ausgebildet und mittels einer Ringdichtung 18 am übrigen Verbindungskanal 13 gasdicht anzuflanschen. Insgesamt weist der Verbindungskanal 13 in sich eine gewisse Verformbarkeit auf, um dann, wenn die Deckwände 6 der Gehäuse 1,2 nicht exakt in einer Ebene flächig nebeneinanderliegen, einen dichten Anschluß sicherzustellen. Sind Ebenenunterschiede konstruktionsbedingt vorgesehen, dann muß auch der Verbindungskanal in seiner Gestaltung solchen Änderungen entsprechend angepaßt werden.

Die Ventilanordnungen 10,11 weisen je eine an einer zentral angeordneten Gewindestange 19 sitzende Ventilscheibe 11 auf, die in eine am jeweiligen Gehäuse 1,2 im Bereich der zugehörigen Verbindungsöffnung 10 an einer Tragbrücke 20 festgesetzte Schraubmutter 21 eingedreht ist. Die Ventilscheibe 11 liegt dabei innerhalb des jeweiligen Gerätegehäuses 1,2, während die Gewindestange mit ihrem freien Ende in den Verbindungskanal 13 ragt. Die Ventilanordnung 10,11 kann somit von außerhalb der Gehäuse 1,2 betätigt werden. Die Gewindestange 19 endet innerhalb des Verbindungskanals 13 und steht dort bei montiertem Verbindungskanal mit einer axial lösbaren Steckkupplung 22 in drehgesichertem Eingriff, wobei die Steckkupplung Teil einer Verbindungswelle 23 ist, die durch ein Dichtungslager 24 verstellbar durch die Abdeckwand 17 nach außen ragt. Durch Verdrehen der Betätigungswelle 23 kann somit die Ventilanordnung 10,11 geöffnet oder geschlossen werden. Das Dichtungslager 24 weist eine in der Begrenzungswand 17 des Verbindungskanals 13 dichtsitzende nach außen ragende Buchse 25 auf, die vorzugsweise am Außenmantel ein Gewinde aufweist, auf welches eine stirnseitig geschlossene Schraubkappe 26 aufdrehbar ist. Die axiale Höhe der Schraubkappe ist dabei so bemessen, daß sie bei geschlossenem Ventil 10,11 und daher weit über die Buchse 25 herausragender Betätigungswelle 23 nicht auf die Buchse 25 aufgeschraubt werden kann. Ist dagegen das Ventil 10,11 ausreichend geöffnet, steht das äußere freie Ende 27 der Betätigungswelle 23 nur noch so weit axial über die Buchse 25 hinaus, daß nun die Schraubkappe 26 vorzugsweise gasdicht aufgeschraubt werden kann. Es ergibt sich dadurch eine sichere Kontrolle dafür, daß im Betriebszustand der Schaltanlage zumindest ein einem Verbindungskanal 13 zugeordnetes Ventil geöffnet ist. Es braucht nur eine Betätigungswelle 23 je Verbindungskanal 13 nach außen geführt sein.

Die Ventile 10,11 sind stufig zu öffnen und zu schließen, wobei in einer ersten Stufe beim Öffnen zunächst ein kleiner Strömungsquerschnitt freigegeben wird, damit sich nach der Montage des Verbindungskanals 13 ein entsprechender Teil der mit zusätzlichem Überdruck im jeweiligen Gehäuse befindlichen Isoliergasfüllung langsam in den Verbindungskanal 13 ausbreiten kann. Um hierbei die im Verbindungskanal nach der Montage vorhandene Luft entweichen zu lassen, ist dem Verbindungskanal insbesondere an der Oberseite ein Entlüftungsanschluß 28 zugeordnet. Durch diesen Entlüftungskanal kann die spezifisch leichtere Luft auf der sich bildenden Gasfüllung nach oben durch den Entlüftungsanschluß gedrückt werden. Es ist jedoch vorzuziehen, an den Entlüftungsanschluß eine Unterdruckpumpe anzuschließen, durch die der Verbindungskanal 13 vor der Füllung mit Isoliergas weitgehend evakuiert wird. Zur stufigen Freigabe des Strömungsquerschnitts weist jedes Ventil zwei nacheinander öffnende und schließende Ventilstrecken 29 und 30 auf, von welchen die zuerst öffnende Ventilstrecke 29 den kleineren Strömungsquerschnitt und die später öffnende Ventilstrecke 30 für den Störfall den größeren Querschnitt aufweist.

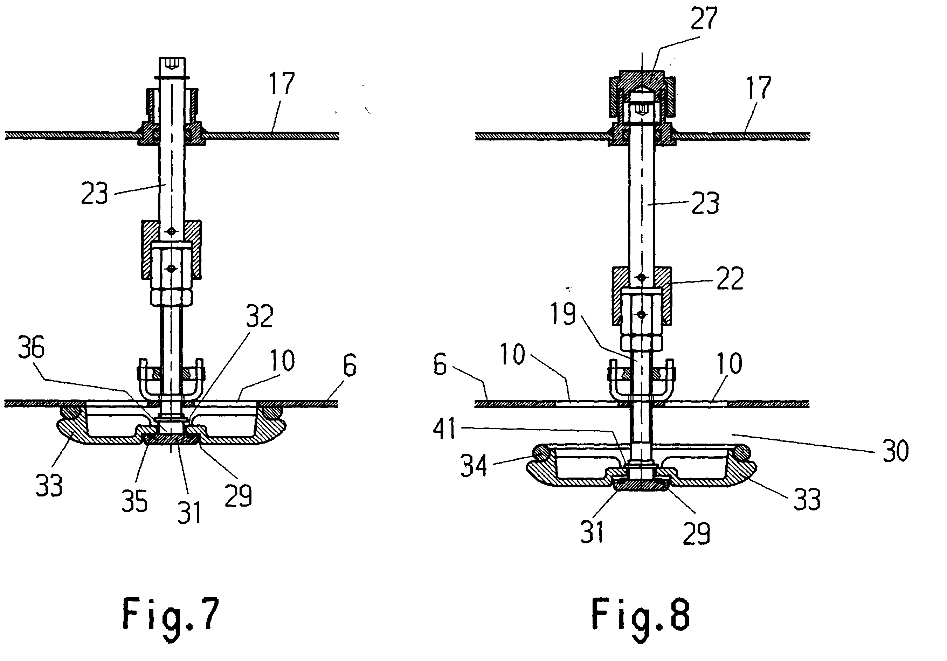

Hierzu ist gemäß den Fig. 7 und 8 eine mit der Gewindestange 19 verbundene kleine Ventilscheibe 31 einer kleinen Ventilöffnung 32 zugeordnet, die in einer demgegenüber größeren Ventilscheibe 33 zentrisch angeordnet ist. Die große Ventilscheibe 33 schließt mit ihrem Umfangsrand Ventilstrecke 30 dicht mit dem Außenrand der Verbindungsöffnung 10 ab.

Bei vollkommen geschlossener Ventilanordnung wird mittels der Gewindestange 19 die kleine Ventilscheibe 31 mit ihrer Dichtung 35 dicht gegen die größere Ventilscheibe 33 und letztere dicht an den Rand der als Ventildurchbruch wirkenden Verbindungsöffnung 10 angedrückt. Wird dann die Gewindestange 19 zum Innenraum des jeweiligen Gehäuses 1,2 hin eingedreht, dann löst sich die kleine Ventilscheibe 31 vom Ventilsitz an der großen Ventilscheibe 33, so daß der zugehörige kleine Strömungsquerschnitt an der kleinen Ventilscheibe vorbei und entlang des mit radialem Spiel durch die große Ventilscheibe 33 hindurchgeführten Ventilzapfens 36 vorbei zur Verbindungsöffnung 10 freigegeben ist. Aufgrund des im jeweiligen Gehäuse 1,2 herrschenden Überdrucks wird dabei die große Ventilscheibe 33 in Anlage mit dem Rand der Verbindungsöffnung 10 selbsttätig gehalten. Nach einem Druckausgleich zwischen Gehäuse und Verbindungskanal fällt die große Ventilscheibe danach selbsttätig in ihre Öffnungsstellung und gibt den großen Strömungsquerschnitt frei. Vorzugsweise ist jedoch mit dem Ventilzapfen 36 eine Sicherungsscheibe 41 verbunden, welche die große Ventilscheibe 33 selbsttätig von ihrem Sitz drückt, wenn die Gewindestange 19 ausreichend weit eingeschraubt ist. Dadurch wird vermieden, daß bei Druckstößen die große Ventilscheibe 33 selbsttätig die Ventilsstrecke 30 schließt.

Im übrigen weist der Verbindungskanal 13 benachbart zueinander auf das jeweils angrenzende Gehäuse 1,2 greifende Dichtungsflansche an der Auflagewand 14 auf, die in einer Ebene mit einem diese Dichtungsflansche über die Trennfuge 12 der Gehäuse 1,2 hinwegverbindenden Verbindungssteg 37 liegen. Die Dichtungsflansche und der Verbindungssteg 37 sind somit Teile der Auflagewand 14. Der Verbindungssteg 37 ist an beiden benachbarten Gehäusen 1,2 derart festgesetzt, daß die den Aussparungen 15 jeweils zugeordneten Ringdichtungen 16 in dichter Anlage zwischen den Dichtungsflanschen und den zugeordneten Dichtflächen an den Gehäusewänden 6 liegen. Um an die innerhalb der Kontur des Verbindungskanals 13 für den ausreichenden Andruck der Dichtungen notwendigen Befestigungsmittel 38 zugänglich zu machen, ist der Verbindungskanal 13 im Bereich der Trennfuge 12 zwischen benachbarten Gehäusen 1,2 wenigstens mit einem Rohreinsatz 39 versehen, der gasdicht von dem Verbindungssteg 37 aus durch die Abdeckwand 17 nach oben und außen gasdicht geführt ist. Dieser im Zentrum offene Rohreinsatz 39 umschließt vorzugsweise je zwei der als Schraubverbindungen ausgebildeten Befestigungsmittel 38, wobei je ein Befestigungsmittel an einem der Gehäuse 1,2 festgesetzt ist. Der Rohreinsatz 39 bildet so Zugrifföffnungen für das nachträgliche Festsetzen des Verbindungskanals 13 an den Gehäusen 1,2.

Dabei ist es auch möglich, bei abnehmbarer Abdeckwand alle Befestigungsmittel 38 innerhalb des Verbindungskanals 13 anzuordnen.

Um im übrigen für eine eventuelle Erweiterung der Schaltanlage vorgesehene Durchführungen 5,7 und die zugehörige Ventilanordnung 11 gegen äußeren Zugriff und Spannungsüberschlag zu schützen, kann dieser Anordnung ein Abschlußkanal 40 zugeordnet werden, der einem halben Verbindungskanal 13 entspricht. Dieser Abschlußkanal kann dann zur Erzielung gleicher Spannungsfestigkeit ebenfalls über das Ventil 11 mit dem Gasvolumen des betreffenden Gehäuses kommunizieren.

Es genügt ferner, jeweils einem Gehäuse 1 oder 2 bzw. einem Verbindungskanal 13 nur eine Ventilanordnung 10,11 zuzuordnen, über welche der Verbindungskanal 13 mit Isoliergas gefüllt werden bzw. mit einem Gehäuse kommunizieren kann.

## Patentansprüche

1. Schaltanlage mit wenigstens zwei druckdichten, mit einem Isoliergas gefüllten Gehäusen (1, 2) von Schaltfeldern oder Schaltfeldgruppen, insbesondere für Mittelspannung, und mit Verbindungsöffnungen (10) in den Gehäusen (1, 2), wobei ein nachträglich anzusetzender Verbindungskanal (13) druckdicht von einer Verbindungsöffnung (10) eines Gehäuses (1) zu einer Verbindungsöffnung (10) des anderen Gehäuses (2) führt und der oder den zu einem Verbindungskanal (13) führenden Verbindungsöffnung/en (10) je eine steuerbare Ventilanordnung (11) zugeordnet ist, dadurch gekennzeichnet, daß die Ventilanordnung (11) mit einer Einrichtung zum wahlweisen öffnen oder Schließen versehen ist.

2. Schaltanlage nach Anspruch 1, dadurch gekennzeichnet, daß durch den Verbindungskanal (13) zusätzlich wenigstens ein elektrischer Kuppelleiter (8) aus einem Gehäuse (1,2) in das andere Gehäuse (2,1) geführt ist.

3. Schaltanlage nach Anspruch 1 oder 2, dadurch gekennzeichnet, daß zwei mit benachbarten Stirnwänden (4) eng aneinander angestellte Gehäuse (1,2) in Deck- oder Seitenwänden (6), die in einer Ebene flächig nebeneinander liegen, Verbindungsöffnungen (10) aufweisen, daß auf diese Deck- oder Seitenwände (6) außen der Verbindungskanal (13) mit einer entsprechend angepaßte Aussparungen (15) aufweisenden Auflagewand (14) gasdicht aufgesetzt ist und daß eine Betätigungsvorrichtung (19,23) vom jeweiligen Ventil (10,11) durch den Verbindungskanal (13) und druckdicht durch eine seiner weiteren Begrenzungswände (17) hindurch nach außen geführt ist.

4. Schaltanlage nach Anspruch 1 oder einem der folgenden, dadurch gekennzeichnet, daß die Ventilanordnung (10,11) eine an einer zentral angeordneten Gewindestange (19) sitzende Ventilscheibe (11) aufweist, die in eine am Gehäuse (12) festgesetzte Schraubmutter (21) eingedreht ist und mit ihrem freien Ende in den Verbindungskanal (13) ragt und daß eine in der Flucht mit der Gewindestange (19) liegende und damit in drehgesicherten Eingriff stehende Betätigungswelle (23) durch ein Dichtungslager (24) verstellbar aus dem Verbindungskanal (13) nach außen ragt.

5. Schaltanlage nach Anspruch 1 oder einem der folgenden, dadurch gekennzeichnet, daß das Dichtungslager (24) eine in der Begrenzungswand (17) des Verbindungskanals (13) dicht sitzende, nach außen ragende Buchse (25) mit einem Gewinde aufweist, und daß erst bei geöffnetem Ventil (10,11) und weitgehend axial in den Verbindungskanal (13) zurückgestellter Betätigungswelle (23) eine stirnseitig geschlossene Schraubkappe (26) gasdicht auf die Buchse (25) aufdrehbar ist.

6. Schaltanlage nach Anspruch 1 oder einem der folgenden, dadurch gekennzeichnet, daß im Verbindungsbereich des Verbindungskanals (13) mit einem Gehäuse (1 oder 2) in jedem Gehäuse (1,2) eine elektrisch isolierte Durchführung (5,7) vorgesehen ist, deren Durchführungsleiter (5) innerhalb der Gehäuse (1,2) jeweils mit einer Sammelschiene (3) verbunden ist, und daß die Durchführungsleiter (5) im Verbindungskanal (13) über einen Kuppelleiter (8) elektrisch leitend verbunden sind.

7. Schaltanlage nach Anspruch 1 oder einem der folgenden, dadurch gekennzeichnet, daß die Ventile (10,11) seitlich neben den Durchführungen (5,7) angeordnet sind.

8. Schaltanlage nach Anspruch 4 oder einem der folgenden, dadurch gekennzeichnet, daß die Gewindestange (19) und die Betätigungswelle (23) über eine axial lösbare Steckkupplung (22) miteinander in Eingriff bringbar sind.

9. Schaltanlage nach Anspruch 1 oder einem der folgenden, dadurch gekennzeichnet, daß das Ventil (10,11) stufig zu öffnen und zu schließen ist.

10. Schaltanlage nach Anspruch 1 oder einem der folgenden, dadurch gekennzeichnet, daß ein Verbindungskanal (13) mehrere in jedem Gehäuse (1,2) nebeneinander angeordnete Durchführungen (5,7), wenigstens eine Ventilanordnung (10,11) sowie die zugehörigen Betätigungswelle (23) und Kuppelleiter (8) umschließt.

11. Schaltanlage nach Anspruch 1 oder einem der folgenden, dadurch gekennzeichnet, daß der Verbindungskanal (13) einen Entlüftungsanschluß (28) aufweist.

12. Schaltanlage nach Anspruch 11, dadurch gekennzeichnet, daß bei geschlossenen Ventilanordnungen (10,11) über den Entlüftungsanschluß (28) Luft aus dem Verbindungskanal (13) abziehbar ist.

13. Schaltanlage nach Anspruch 1 oder einem der folgenden, dadurch gekennzeichnet, daß je eine Ringdichtung (16) an jedem Gehäuse (1,2) zusammengehörige Durchführungen (5,7) und wenigstens ein Ventil (10,11) umschließt.

14. Schaltanlage nach Anspruch 1 oder einem der folgenden, dadurch gekennzeichnet, daß der Verbindungskanal (13) benachbart zueinander auf das jeweils angrenzende Gehäuse (1,2) greifende Dichtungsflansche an der Auflagewand (14) aufweist, die in einer Ebene mit einem diese Dichtungsflansche über die Trennfuge (12) der Gehäuse (1,2) hinweg verbindenden Verbindungssteg (37) liegen und daß der Verbindungssteg (37) an beiden benachbarten Gehäusen (1,2) derart festgesetzt ist, daß in diesem Bereich die Ringdichtungen (16) in dichter Anlage zwischen den Dichtungsflanschen und den zugeordneten Gehäusewänden (6) liegen.

15. Schaltfeld nach Anspruch 14, dadurch gekennzeichnet, daß der Verbindungskanal (13) im Bereich der Trennfuge (12) zwischen benachbarten Gehäusen (1,2) wenigstens einen Rohreinsatz (39) aufweist, der gasdicht von dem Verbindungssteg (37) durch eine Abdeckwand (17) nach außen geführt und außen offen ist und daß der Rohreinsatz (39) wenigstens ein Befestigungsmittel (38), mit dem der Verbindungssteg (37) am Gehäuse (1,2) festgesetzt ist, umschließt.

16. Schaltanlage nach Anspruch 9 oder einem der folgenden, dadurch gekennzeichnet, daß das Ventil (10,11) zwei nacheinander öffnende und schließende Ventilstrecken (29,30) aufweist, von welchen die zuerst öffnende Ventilstrecke (29) einen kleineren Strömungsquerschnitt als die später öffnende Ventilstrecke (30) aufweist.

17. Schaltfeld nach Anspruch 16, dadurch gekennzeichnet, daß eine mit der Gewindestange (19) verbundene kleine Ventilscheibe (31) einer Ventilöffnung (32) in einer demgegenüber größeren Ventilscheibe (33) zugeordnet ist und daß die größere Ventilscheibe (33) einen zum Verbindungskanal (13) führenden Ventildurchbruch (10) unmittelbar zugeordnet ist.

18. Schaltfeld nach Anspruch 1 oder einem der folgenden, dadurch gekennzeichnet, daß der Verbindungskanal (13) einen abnehmbaren Kanalgehäuseteil (17) aufweist.

19. Schaltfeld nach Anspruch 18, dadurch gekennzeichnet, daß der abnehmbare Kanalgehäuseteil (17) ein der Auflagewand (14) mit Abstand gegenüberliegender Kanaldeckel ist.

## Claims

1. Switchgear comprising at least two pressure-tight housings (1, 2) filled with an insulating gas for switch panels or switch panel groups, in particular for medium voltage, and comprising connecting apertures (10) in the housings (1, 2), wherein a connecting channel (13) to be attached subsequently leads in a pressure-tight manner from a connecting aperture (10) of one housing (1) to a connecting aperture (10) of the other housing (2), a respective controllable valve arrangement (11) is allocated and to the connecting aperture(s) (10) leading to a connecting channel (13),
characterised in that the valve arrangement (11) is provided with a device for selective opening or closing.

2. Switchgear according to claim 1, characterised in that in addition at least one electric coupling lead (8) passes through the connecting channel (13) from one housing (1, 2) to the other (2, 1).

3. Switchgear according to claim 1 or 2, characterised in that two housings (1, 2) disposed with adjacent end walls (4) close against one another have in top or side walls (6), which lie flat adjacent to one another in one plane, connecting apertures (10), in that on these top or side walls (6) on the outside the connecting channel (13) is mounted in a gas-tight manner with a contact wall (14) having correspondingly adapted recesses (15), and in that an actuator (19, 23) passes from the respective valve (10, 11) through the connecting channel (13) and in a pressure-tight manner through one of its further boundary walls (17).

4. Switchgear according to claim 1 or one of the subsequent claims,
characterised in that the valve arrangement (10, 11) has a valve disc (11) which rests on a centrally disposed threaded rod (19) and which is screwed into a threaded nut (21) fixed to the housing (12) and projects with its free end into the connecting channel (13), and in that an actuating shaft (23) lying flush with the threaded rod (19) and non-rotatably engaged therewith projects adjustably from the connecting channel (13) to the outside through a sealing bearing (24).

5. Switchgear according to claim 1 or one of the subsequent claims,
characterised in that the sealing bearing (24) has an outwardly projecting bush (25) with a thread, which rests in a sealing-tight manner in the boundary wall (17) of the connecting channel (13), and in that only when the valve (10, 11) is open and the actuating shaft (23) is retracted substantially axially into the connecting channel (13) can a threaded cap (26) sealed on the end face be rotated in a gas-tight manner on to the bush (25).

6. Switchgear according to claim 1 or one of the subsequent claims,
characterised in that in the connecting region of the connecting channel (13) to a housing (1 or 2), in each housing (1, 2) an electrically insulated conduit (5, 7) is provided, whose through-lead (5) is respectively connected inside the housing (1, 2) to a bus-bar (3), and in that the through-leads (5) in the connecting channel (13) are connected conductively via a coupling lead (8).

7. Switchgear according to claim 1 or one of the subsequent claims,
characterised in that the valves (10, 11) are disposed laterally next to the conduits (5, 7).

8. Switchgear according to claim 4 or one of the subsequent claims,
characterised in that the threaded rod (19) and the actuating shaft (23) can be brought into mutual engagement via an axially detachable plug coupling (22).

9. Switchgear according to claim 1 or one of the subsequent claims,
characterised in that the valve (10, 11) is to be opened and closed in stages.

10. Switchgear according to claim 1 or one of the subsequent claims,
characterised in that a connecting channel (13) has a plurality of conduits (5, 7) disposed adjacent to one another in each housing (1, 2), at least one valve arrangement (10, 11) and the associated actuating shaft (23) and coupling lead (8).

11. Switchgear according to claim 1 or one of the subsequent claims,
characterised in that the connecting channel (13) has a de-aerating terminal (28).

12. Switchgear according to claim 11, characterised in that when the valve arrangements (10, 11) are closed, air can be drawn out of the connecting channel (13) via the de-aerating terminal (28).

13. Switchgear according to claim 1 or one of the subsequent claims,
characterised in that a respective annular seal (16) encloses conduits (5, 7) and at least one valve (10, 11) on each housing (1, 2).

14. Switchgear according to claim 1 or one of the subsequent claims,
characterised in that the connecting channel (13) has sealing flanges on the contact wall (14) adjacent to one another and acting on the respectively abutting housing (1, 2), which flanges lie in a plane with a connecting web (27) connecting them beyond the joint (12) of the housings (1, 2), and in that the connecting web (37) is so fixed to both adjacent housings (1, 2) that in this region the annular seals (16) are in flush abutment between the sealing flanges and the associated housing walls (6).

15. Switch panel according to claim 14, characterised in that the connecting channel (13) has in the region of the joint (12) between adjacent housings (1, 2) at least one tubular insert (39), which passes in a gas-tight manner from the connecting web (37) through a cover wall (17) to the outside and is open on the outside, and in that the tubular insert (39) encompasses at least one fixing means (38), with which the connecting web (37) is fixed to the housing (1, 2).

16. Switchgear according to claim 9 or one of the subsequent claims,
characterised in that the valve (10, 11) has two valve stages (29, 30) which open and close consecutively, of which the stage (29) that opens first has a smaller flow cross-section than the stage (30) that opens later.

17. Switch panel according to claim 16, characterised in that a small valve disc (31) connected to the threaded rod (19) is associated with a valve aperture (32) in a valve disc (33) which is larger than said aperture and in that the larger valve disc (33) is directly associated with a valve hole (10) leading to the connecting channel (13).

18. Switch panel according to claim 1 or one of the subsequent claims,
characterised in that the connecting channel (13) has a removable channel housing part (17).

19. Switch panel according to claim 18, characterised in that the removable channel housing part (17) is a channel cover lying opposite the contact wall (14) with clearance.

## Revendications

1. Installation de distribution avec au moins deux coffrets (1, 2), étanches, remplis de gaz isolant, de panneaux de commande ou de groupes de panneaux de commande, en particulier pour moyenne tension et avec des ouvertures de connexion (10) dans les coffrets (1, 2), un canal de connexion (13), monté ultérieurement, faisant la jonction, de manière étanche, entre une ouverture de connexion (10) d'un coffret (1) et une ouverture de connexion (10) de l'autre coffret (2) et l'ouverture de connexion (10), menant à un canal de connexion (13) étant associée à un dispositif de soupape commandable (11), caractérisée en ce que le dispositif de soupape (11) est muni d'un dispositif pour l'ouverture ou la fermeture sélectives.

2. Installation de distribution selon la revendication 1, caractérisée en ce que de plus au moins un connecteur d'interconnexion électrique (8) est guidé par le canal de connexion (13) d'un coffret (1, 2) à l'autre coffret (2, 1).

3. Installation de distribution selon la revendication 1 ou 2, caractérisée en ce que deux coffrets (1, 2) tout près l'un de l'autre par leurs parois frontales voisines (4), présentent, dans des parois latérales ou de couvercle (6) se trouvant dans un plan l'une à côté de l'autre, des ouvertures de connexion (10), en ce qu'à l'extérieur, le canal de connexion (13) est monté par une paroi d'application (14), présentant des évidements (15) adaptés en conséquence, de manière étanche, sur ces parois latérales ou de couvercle (6), et en ce qu'un dispositif d'actionnement (19, 23) de la soupape respective (10, 11) est guidé par le canal de connexion (13), de manière étanche, à travers l'une de ses autres parois de limitation (17) vers l'extérieur.

4. Installation de distribution selon la revendication 1 ou l'une des suivantes, caractérisée en ce que le dispositif de soupape (10, 11) présente un disque de soupape (11) qui repose sur une tige filetée centrale (19) qui est vissée dans un écrou à vis (21) fixé sur le coffret (12) et qui s'engage, par son extrémité libre, dans le canal de connexion (13) et en ce qu'un arbre d'actionnement (23), aligné à la tige filetée (19) et de ce fait rigide à la torsion, fait saillie vers l'extérieur du canal de connexion (13) de manière réglable par un palier d'étanchéité (24).

5. Installation de distribution selon la revendication 1 ou l'une des suivantes, caractérisée en ce que le palier d'étanchéité (24) présente une douille filetée (25) faisant saillie vers l'extérieur, reposant de manière étanche dans la paroi de limitation (17) du canal de connexion (13) et en ce qu'à l'ouverture de la soupape (10, 11) et quand l'arbre d'actionnement (23) est largement rentré axialement dans le canal de connexion (13), un bouchon à vis (26), fermé en face frontale, est vissé, de manière étanche, sur la douille (25).

6. Installation de distribution selon la revendication 1 ou l'une des suivantes, caractérisée en ce que dans la zone de connexion du canal de connexion (13) à un coffret (1 ou 2), il est prévu dans chaque coffret (1, 2), un passage isolé électriquement (5, 7), dont le connecteur de traversée (5) est relié à l'intérieur des coffrets (1, 2), respectivement à une barre omnibus (3) et en ce que les connecteurs de traversée (5) sont reliés, dans le canal de connexion (13), par un connecteur d'interconnexion (8), de manière électriquement conductrice.

7. Installation de distribution selon la revendication 1 ou l'une des suivantes, caractérisée en ce que les soupapes (10, 11) sont disposées à côté des passages (5, 7).

8. Installation de distribution selon la revendication 4 ou l'une des suivantes, caractérisée en ce que la tige filetée (19) et l'arbre d'actionnement (23) peuvent s'engager mutuellement par un accouplement à fiche (22) axialement amovible.

9. Installation de distribution selon la revendication 1 ou l'une des suivantes, caractérisée en ce que la soupape (10, 11) s'ouvre et se ferme par étape.

10. Installation de distribution selon la revendication 1 ou l'une des suivantes, caractérisée en ce qu'un canal de connexion (13) entoure plusieurs passages (5, 7), l'un à côté de l'autre dans le coffret (1, 2), au moins un dispositif de soupapes (10, 11) ainsi que l'arbre d'actionnement associé (23) et le connecteur d'interconnexion (8).

11. Installation de distribution selon la revendication 1 ou l'une des suivantes, caractérisée en ce que le canal de connexion (13) présente un raccordement de dégagement d'air (28).

12. Installation de distribution selon la revendication 11, caractérisée en ce que l'air est extrait du canal de connexion (13) par le raccordement de dégagement d'air (28) quand les dispositifs de soupape sont fermés (10, 11).

13. Installation de distribution selon la revendication 1 ou l'une des suivantes, caractérisée en ce qu'une bague d'étanchéité (16) entoure, sur chaque coffret (1, 2), des passages associés (5, 7) et au moins une soupape (10, 11).

14. Installation de distribution selon la revendication 1 ou l'une des suivantes, caractérisée en ce que le canal de connexion (13) présente, sur la paroi d'application (14), des brides d'étanchéité voisines les unes des autres qui s'appliquent contre le coffret attenant (1, 2), qui sont dans un plan avec une passerelle (37) reliant ces brides d'étanchéité par l'intermédiaire du joint (12) des coffrets (1, 2) et en ce que la passerelle (37) est fixée aux deux coffrets voisins (1, 2) de sorte que dans cette zone, les bagues d'étanchéité (16) sont appliquées hermétiquement entre les brides d'étanchéité et les parois de coffret associées (6).

15. Panneau de commande selon la revendication 14, caractérisé en ce que le canal de connexion (13), présente, dans la zone des joints (12) entre les coffrets voisins (1, 2), au moins une tubulure (39) qui est guidée, de manière étanche au gaz, depuis la passerelle (37) à travers une paroi de couvercle (17) vers l'extérieur et est ouverte à l'extérieur et en ce que la tubulure (39) entoure au moins un moyen de fixation (38) qui fixe la passerelle (37) au coffret (1, 2).

16. Installation de distribution selon la revendication 9 ou l'une des suivantes, caractérisée en ce que la soupape (10, 11) présente deux parcours de soupape (29, 30) s'ouvrant et se fermant l'un après l'autre dont le parcours de soupape (29), s'ouvrant en premier, présente une section transversale d'écoulement plus petite que le parcours d'écoulement (30), s'ouvrant plus tard.

17. Panneau de commande selon la revendication 16, caractérisé en ce qu'un petit disque de soupape (31), relié à la tige filetée (19), est associé à une ouverture de soupape (32) dans un plus grand disque de soupape (33) et en ce que le grand disque de soupape (33) est associé directement à une traversée de soupape (10), menant au canal de connexion (13).

18. Panneau de commande selon la revendication 1 ou l'une des suivantes, caractérisé en ce que le canal de connexion (13) présente une partie de coffret de canal amovible (17).

19. Panneau de commande selon la revendication 18, caractérisé en ce que la partie de coffret de canal amovible (17) est un couvercle de canal opposé à distance de la paroi d'application (14).
